# EUROPÄISCHE PATENTSCHRIFT

(11) **EP 2 855 548 B1**
(45) Veröffentlichungstag und Bekanntmachung des Hinweises auf die Patenterteilung: **22.11.2017**
(21) Anmeldenummer: 13726142.6
(22) Anmeldetag: 22.05.2013
(51) Int. Cl.: C08G 18/08, C08G 18/32, C08G 18/80, C09D 175/04, C09D 175/12

(54) **WÄSSRIGE BLOCKIERTE POLYURETHANHARNSTOFFDISPERSION**
AQUEOUS BLOCKED POLYURETHANE URIC DISPERSION
DISPERSION D'URÉE DE POLYURÉTHANE AQUEUSE BLOQUÉE

(30) Priorität: 24.05.2012 EP 12169302
(43) Veröffentlichungstag der Anmeldung: 08.04.2015
(73) Patentinhaber: Covestro Deutschland AG, 51373 Leverkusen (DE)
(72) Erfinder: GRABLOWITZ, Hans-Georg, 50733 Köln (DE); FELLER, Thomas, 42659 Solingen (DE); MICHAELIS, Thomas, 51375 Leverkusen (DE); HEBESTREIT, Tanja, 51688 Wipperfürth (DE); GIPPERICH, Ingo, 51373 Leverkusen (DE)
(74) Vertreter: Levpat
(86) Internationale Anmeldenummer: PCT/EP2013/060445
(87) Internationale Veröffentlichungsnummer: WO 2013/174830

(56) Entgegenhaltungen:
- EP-A1- 0 568 976
- WO-A1-00/59979
- WO-A1-2009/059697

## Beschreibung

Die vorliegende Erfindung betrifft eine wässrige blockierte Polyurethanharnstoffdispersion, ein Beschichtungsmittel umfassend die wässrige blockierte Polyurethanharnstoffdispersion, die Verwendung der wässrigen blockierten Polyurethanharnstoffdispersion oder des Beschichtungsmittels zur Herstellung einer Beschichtung, eine Beschichtung, erhältlich unter Verwendung der wässrigen blockierten Polyurethanharnstoffdispersion oder des Beschichtungsmittels sowie ein Verfahren zur Herstellung der wässrigen blockierten Polyurethanharnstoffdispersion.

Im Stand der Technik sind wässrige blockierte Polyurethanharnstoffdispersion bekannt, die durch Umsetzung von Polyolen, Polyisocyanaten, Hydrophilierungsmitteln, Blockierungsmitteln für Isocyanatgruppen, Kettenverlängerern und Wasser erhältlich sind. Derartige Systeme sind beispielsweise in der DE 199 14 885 A1 und in der WO 97/12924 beschrieben. Diese Systeme werden unter anderem zur Herstellung von Beschichtungen verwendet. Allerdings weisen die bekannten Beschichtungen häufig nicht die gewünschte Beständigkeit gegenüber Laugen auf.

Als Blockierungsmittel eignen sich grundsätzlich verschiedene Isocyanat-reaktive Verbindungen wie beispielsweise ε-Caprolactam, Butanonoxim, Triazol oder Malonsäureester die bei unterschiedlichen Temperaturen deblockieren. Bei vielen Beschichtungsprozessen spielen niedrige Prozesstemperaturen eine wichtige Rolle um die Energiekosten möglichst gering zu halten. Aus diesem Grund besteht ein Bedarf an Produkten mit verhältnismäßig niedriger Deblockierungstemperatur. Aus Arbeitshygienischen Gründen werden ferner toxikologisch unbedenklichere Blockierungsmittel ebenfalls bevorzugt.

Aufgabe der vorliegenden Erfindung war es daher eine wässrige blockierte Polyurethanharnstoffdispersion bereit zu stellen, die zur Herstellung besonders Laugen-beständiger Beschichtungen verwendet werden kann und gleichzeitig bei verhältnismäßig niedrigen Temperaturen deblockiert. Bevorzugt soll die Deblockierung unterhalb von 130 °C erfolgen.

Diese Aufgabe ist erfindungsgemäß durch eine wässrige blockierte Polyurethanharnstoffdispersion gelöst, die durch Umsetzung von wenigstens
a) einem Polyisocyanat,
b) einem Blockierungsmittel für Isocyanatgruppen,
c) einem Polyamin mit wenigstens einer Carboxyl- und/oder Carboxylatgruppe,
d) Wasser
erhältlich ist, wobei das Blockierungsmittel b) 3,5-Dimethylpyrazol umfasst oder daraus besteht und in einem Anteil von > 70 mol% bezogen auf die Isocyanatgruppen der Komponente a) eingesetzt wird.

Als Polyisocyanate werden vorliegend Verbindungen angesehen, die NCO-Gruppen aufweisen.

Das Polyisocyanat a) kann ein zahlenmittleres Molekulargewicht von 140 bis 1500 g/mol und vorzugsweise von 168 bis 700 g/mol aufweisen.

Gemäß einer bevorzugten Ausführungsform der Erfindung ist vorgesehen, dass das Polyisocyanat a) eine Isocyanatfunktionalität von ≥ 2 und ≤ 6, bevorzugt von ≥ 3 und ≤ 5 und besonders bevorzugt von ≥ 3 und ≤ 4 aufweist.

Das Polyisocyanat a) kann einen NCO-Gruppen Gehalt von 15 bis 30, bevorzugt von 18 bis 25 und besonders bevorzugt von 20 bis 24 Gew.-%, bezogen auf das zahlenmittlere Molgewicht des Polyisocyanats, haben.

Geeignete Polyisocyanate sind z.B. Hexamethylendiisocyanat (HDI), Isophorondiisocyanat (IPDI), 4,4'-Diisocyanatodicyclohexylmethan (Hi2MDI), 1,4-Butandiisocyanat, Hexahydrodiisocyanatotoluol, 1,3-Bishydroxymethylcyclohexan, Hexahydrodiisocyanatoxylol, Nonantriisocyanat. Besonders bevorzugt ist die Verwendung von Isophorondiisocyanat, Hexamethylendiisocyanat und/oder 4,4'-Diisocyanatodicyclohexylmethan.

Ebenfalls geeignet, jedoch weniger bevorzugt sind aromatische Isocyanate wie 2,4- oder 2,6-Diisocyanatotoluol (TDI), Xylylendiisocyanat und 4,4'-Diisocyanatodiphenylmethan.

Polyisocyanate auf Basis der vorstehenden Isocyanate mit Uretdion-, Biuret-, Allophanat-, Isocyanurat-, Iminoxadiazindion- oder Urethanstruktureinheiten können ebenfalls verwendet werden.

Bevorzugt ist, wenn das Polyisocyanat a) aliphatische Polyisocyanate, bevorzugt Hexamethylendiisocyanat und besonders bevorzugt Trimere von Hexamethylendiisocyanat umfasst.

Unter einem Blockierungsmittel werden vorliegende Verbindungen verstanden, die mit einer Isocyanatgruppe reagieren und unter definierten Bedingungen wieder von dieser abgespalten werden können.

Das Blockierungsmittel b) wird mit einem Anteil von > 70 mol%, bevorzugt von ≥ 75 mol% bezogen auf die Isocyanatgruppen der Komponente a) eingesetzt.

Vorteilhaft ist auch wenn das Verhältnis von blockierten zu unblockierten Isocyanatgruppen in der wässrigen blockierten Polyurethanharnstoffdispersion bei 2,2:1 bis 6,5:1, bevorzugt bei 2,5:1 bis 6:1 und besonders bevorzugt bei 3,0:1 bis 5,5:1 liegt.

Als Polyamine im Sinne der Erfindung werden Verbindungen angesehen, die Amingruppen aufweisen.

Bevorzugt kann das Polyamin ein Molekulargewicht von 50 bis 400 g/mol und besonders bevorzugt von 100 bis 200 g/mol aufweisen.

Das Polyamin c) kann vorzugsweise eine Funktionalität an primären und / oder sekundären Amingruppen von ≥ 2 und ≤ 6, weiter bevorzugt von ≥ 2 und ≤ 5 und besonders bevorzugt von ≥ 2und ≤ 3 aufweisen.

Gemäß einer weiteren Ausführungsform der Erfindung kann das Polyamin c) eine Carboxyl- und/oder Carboxylatfunktionalität von ≥ 1 und ≤ 3, bevorzugt von ≥ 1 und ≤ 2 und besonders bevorzugt von 1 aufweisen.

Besonders gute Ergebnisse werden auch erzielt, wenn die Carboxylatgruppe eine Alkalicarboxylatgruppe und bevorzugt eine Natriumcarboxylatgruppe ist.

Beispiele für Polyamine c) sind Piperazin-2-carboxylsäure, N-(2-aminoethyl)-β-alanin, N-(aminoacetyl)-aspartat, Tryptophan, Glutamin, Lysin, Histidin.

In einer bevorzugten Ausführungsform der Erfindung, werden bei der Herstellung der wässrigen blockierten Polyurethanharnstoffdispersion ausschließlich Polyamine eingesetzt, die Carboxyl- und/oder Carboxylatgruppen tragen.

In einer weiteren bevorzugten Ausführungsform der Erfindung, werden bei der Herstellung der wässrigen blockierten Polyurethanharnstoffdispersion ausschließlich Polyamine eingesetzt, die ein Molekulargewicht von < 1000 g/mol, bevorzugt ≤ 750 g/mol und besonders bevorzugt ≤ 500 g/mol aufweisen.

Vorteilhaft ist auch, wenn wässrige blockierte Polyurethanharnstoffdispersion ausschließlich anionisch hydrophiliert ist. Dies bedeutet, dass die Polyurethanharnstoffdispersion nicht kationisch und / oder nicht-ionisch hydrophiliert, d.h. keine entsprechenden Gruppen aufweist.

Zusätzlich kann bei der Herstellung der erfindungsgemäßen wässrigen blockierten Polyurethanharnstoffdispersion auch noch folgende Komponenten mit umgesetzt werden: Polyole einer Funktionalität von ≥ 2 und ≤ 6 und eines zahlengemittelten Molekulargewichts von 500 - 6000 g/mol, dazu zählen die üblicherweise verwendeten Polyether-, Polyester-und Polycarbonatpolyole und deren Mischungen. Polyole einer Funktionalität von ≥ 2 und ≤ 6 und eines zahlengemittelten Molekulargewichts von < 300 g/mol wie beispielsweise 1,4-Butandiol, 1,6-Hexandiol, Cyclohexandimethanol, Trimethylolpropan etc. Polyamine und/oder Polyhydrazide und(/oder Hydrazin ohne Carboxylfunktion einer Funktionalität von ≥ 2 und ≤ 6 und einer Molmasse < 250 g/mol wie beispielsweise Ethylendiamin, 1,6-Diaminohexan, Isophorondiamin, Hydrazinhydrat, Adipinsäuredihydrazid etc.

Ein weiterer Gegenstand der Erfindung ist ein Beschichtungsmittel umfassend wenigstens eine erfindungsgemäße wässrige blockierte Polyurethanharnstoffdispersion und eine nicht-reaktive Polyurethandispersion e) und / oder eine Isocyanatreaktive-Verbindung f).

Unter einer nicht-reaktiven Polyurethandispersion e) wird vorliegend ein Polyurethan oder ein Polyurethanharnstoff verstanden, der bevorzugt in Wasser dispergiert ist und der ausschließlich gegenüber Isocyanatgruppen reaktionsträge Gruppen aufweist. Bevorzugt sind die gegenüber Isocyanatgruppen reaktionsträgen Gruppen Urethan- und/oder Harnstoff-und/oder Carboxylat- und/oder Sulfonatgruppen. Bedingt durch den Herstellprozess ist es möglich, dass derartige Dispersionen geringe Mengen an Aminendgruppen aufweisen.

Beispiele für nicht-reaktive Polyurethandispersion e) sind die von der Bayer MaterialScience AG vermarkteten Produkte des Typs Impranil, Baybond, Bayhydrol UH wie z.B. Impranil DLS, Impranil DLN, Impranil DLC/F, Baybond PU 406, Baybond PU 330, Bayhydrol UH 340/1 etc.

Als isocyanatreaktive-Verbindungen f) im Sinne der Erfindung werden Verbindungen verstanden, die Isocyanat-reaktive Gruppen aufweisen.

Die Isocyanatreaktive-Verbindung f) kann eine Funktionalität an Isocyanatreaktiven-Gruppen von ≥ 2 und ≤ 6, bevorzugt von ≥ 3 und ≤ 5 und besonders bevorzugt von ≥ 3 und ≤ 4 aufweisen.

Die Isocyanatreaktiven-Gruppen kann bevorzugt aus der Gruppe OH, SH, NH, NH₂, H₂N-NH ausgewählt sein.

In Weiterbildung des erfindungsgemäßen Beschichtungsmittels ist vorgesehen, dass die Isocyanatreaktive-Verbindung f) ein Polyol und besonders bevorzugt ein Polyacrylat-Polyol umfasst.

Beispiele für Polyole sind die von der Bayer MaterialScience AG vermarkteten Produkte des Typs Bayhydrol A (Polyacrylatpolyole, Bayhydrol E (Polyesterpolyole) Bayhydrol U (Polyesterurethanpolyole).

Als Polyacrylat-Polyole können insbesondere Bayhydrol A XP 2770 und Bayhydrol A XP 2470 verwendet werden.

Das erfindungsgemäße Beschichtungsmittel kann auch noch folgende Bestandteile enthalten: Additive zur Formulierung von Beschichtungsmitteln wie Verlaufsmittel, Benetzungsmittel, Haftvermittler, Verdicker, Antioxidationsmittel, Farbpigmente, Pigmente, Koaleszensmittel, Entschäumer, Entlüfter, etc. Es ist auch möglich, weitere wässrige Dispersionen, die nicht unter e) und f) fallen, mit den erfindungsgemäßen Dispersionen zu mischen. Beispiele sind hier Polyacrylatdispersionen, Polyvinylacetatdispersionen, Poly(styrol-co-butadien)dispersionen, Polyepoxydispersionen etc.

Noch ein weiterer Gegenstand der Erfindung ist die Verwendung einer erfindungsgemäßen wässrigen blockierten Polyurethanharnstoffdispersion oder eines erfindungsgemäßen Beschichtungsmittels zur Herstellung einer Beschichtung.

Ebenso ist eine Beschichtung, die unter Verwendung einer erfindungsgemäßen wässrigen blockierten Polyurethanharnstoffdispersion oder eines erfindungsgemäßen Beschichtungsmittels erhältlich ist, Gegenstand der Erfindung.

Als Substrat für die Beschichtung eignen sich besonders Glas, Metall, Flächentextilien (Vliese, Gewebe, Gewirke, mikroporöse Koagulate), Leder, Fasern (Glasfaser, Carbonfasern, Polyesterfasern, Baumwollfasern etc.), Papier, Holz und Kunststoff.

Schließlich ist auch ein Verfahren zur Herstellung einer erfindungsgemäßen wässrigen blockierten Polyurethanharnstoffdispersion Gegenstand der Erfindung, bei dem das Polyisocyanat a) mit dem Blockierungsmittel b) zu einem teilweise blockierten Polyisocyanat und das teilweise blockierte Polyisocyanat mit dem Polyamin c) zu einem hydrophilierten Polyurethanharnstoff umgesetzt und in Wasser dispergiert wird.

Dabei kann das Blockierungsmittel b) vorgelegt und das Polyisocyanat a) zugegeben oder umgekehrt vorgegangen werden. Vorzugsweise wird jedoch das Blockierungsmittel b) zu dem vorgelegten Polyisocyanat a) gegeben.

Das Blockierungsmittel b) kann je nach Aggregatzustand auch in gelöster Form, z.B. in Aceton, eingesetzt werden.

Die Reaktionstemperatur sollte so gewählt sein, dass das Gleichgewicht der Reaktion des Polyisocyanats a) mit dem Blockierungsmittel b) auf der Seite der Bildung des blockierten Polyisocyanats liegt.

Wenn ein Lösemittel verwendet wird, wird dies nach erfolgter Dispergierung wieder abdestilliert, vorzugsweise werden dabei Lösemittel mit einer niedrigen Siedetemperatur wie z.B. Aceton, Methylethylketon oder Ethylacetat eingesetzt.

Das Polyamin c) kann unverdünnt oder in gelöster Form zugegeben werden.

Bei der Zugabe des Polyamins c) kann schon eine Teilmenge des Wassers mit zum Präpolymer gegeben wenn das Polyamin in Salzform vorliegt.

Bevorzugt ist, wenn im erfindungsgemäßen Verfahren das Blockierungsmittel b) mit einen Anteil von ≥75 mol% bezogen auf die Isocyanatgrup- pen der Komponente a) eingesetzt wird.

Vorteilhaft ist auch wenn im erfindungsgemäßen Verfahren das Blockierungsmittel b) in einer Menge eingesetzt wird, so dass das Verhältnis von blockierten zu unblockierten Isocyanatgruppen in der hergestellten wässrigen blockierten Polyurethanharnstoffdispersion bei 2,2:1 bis 6,5:1, bevorzugt bei 2,5:1 bis 6:1 und besonders bevorzugt bei 3,0: 1 bis 5,5:1 liegt.

In einer bevorzugten Ausführungsform der Erfindung, werden im erfindungsgemäßen Verfahren bei der Herstellung der wässrigen blockierten Polyurethanharnstoff dispersion ausschließlich Polyamine eingesetzt, die Carboxyl- und/oder Carboxylatgruppen tragen.

In einer weiteren bevorzugten Ausführungsform der Erfindung, werden im erfindungsgemäßen Verfahren bei der Herstellung der wässrigen blockierten Polyurethanharnstoffdispersion ausschließlich Polyamine eingesetzt, die ein Molekulargewicht von < 1000 g/mol, bevorzugt ≤ 750 g/mol und besonders bevorzugt : ≤ 500 g/mol aufweisen.

Ein weiterer Gegenstand der Erfindung ist eine wässrige blockierte Polyurethanharnstoffdispersion, erhältlich nach dem erfindungsgemäßen Verfahren.

Der Erfindung wird im Folgenden anhand von Beispielen näher erläutert.

### Chemikalien:

3,5 Dimethylpyrazol (DMP): Blockierungsmittel (ALDRICH, DE)
Desmodur N3300: HDI-Trimer mit einer Funktionalität von 3 und einem NCO-Gehalt von 21,8% (BAYER AG, Leverkusen)
Natrium-N-(2-aminoethyl)-β-alaninat (KV 1386): Diamin mit Carboxylatfunktion zur Hydrophilierung (BAYER AG, Leverkusen)
Natrium-N-(2-aminoethylsulfonat) (AAS-Salz): Diamin mit Sulfonatfunktion zur Hydrophilierung (BAYER AG, Leverkusen)
1,4-Butandiol-2-Natriumsulfonat (Polyethersulfonat): Diol mit Sulfonatfunktion zur Hydrophilierung (BAYER AG, Leverkusen)
Caprolactam: Blockierungsmittel (ALDRICH, DE)
Polypropylenoxiddiol (DE 3600): Polyetherpolyol mit einer Molmasse von 2000 g/mol (BAYER AG, Leverkusen)
Dimethylolpropionsäure (DMPS): Diol mit Carboxylfunktion zur Hydrophilierung (ALDRICH, DE)
Bayhydur BL XP 2706: wässriges, Lösemittel-freies blockiertes aliphatisches Polyisocyanat, mit Dimethylethanolamin neutralisiert (BAYER AG, Leverkusen)
Bayhydur BL X 2810: wässriges, Lösemittel-freies blockiertes aliphatisches Polyisocyanat (BAYER AG, Leverkusen)
Bayhydrol A XP 2770: wasserbasiertes Polyacrylat-Polyol (BAYER AG, Leverkusen)
Natriumhydroxid (NaOH): Neutralisationsmittel (ALDRICH, DE)

### Methoden:

NCO Titration: Der NCO-Gehalt wurde volumetrisch nach der DIN EN ISO 11909 bestimmt Viskosität: Die Bestimmung der Viskosität erfolgte mittels eines Haake-Viskosimeters bei Raumtemperatur (23 °C) und einer Scherrate von 45 s-1.

Feststoffgehalt: Der Feststoffgehalt wurde nach einer abgeänderten Version zur DIN-EN ISO 3251 durchgeführt, da hohe Trocknungstemperaturen zur teilweisen Deblockierung führten und das Messergebnis verfälschten. Dabei wurden in etwa 1 g der Dispersion auf eine Aluminiumschale gebracht, gewogen und mindestens 6 h bei Raumtemperatur getrocknet. Danach wurde das Produkt eine weitere Stunde bei 50 °C getrocknet und erneut das Gewicht bestimmt.

Temperaturbereich zur Abspaltung der Blockierungsmittel: Die thermogravimetrische Analyse wurden auf einer Mikrothermowaage Typ TGS-2 (Perkin-Elmer) unter Schutzgas bei einer Aufheizrate von 20 K/min. anhand von verfilmten Mustern der Dispersion durchgeführt. Die Dispersionen wurden dazu bei einer Nassfilmdicke von 100 µm für 87 h bei Raumtemperatur und 0% relativer Luftfeuchte in einer Trockenbox getrocknet und verfilmt.

Es ist jeweils die Temperatur angegeben, bei der es zu einem merklichen Massenverlust durch die thermische Zersetzung der Probe kam.

Lösemittelbeständigkeit: Dazu wird eine kleine Menge der entsprechenden Lösmittel (Xylol, Methoxypropylacetat, Ethylacetat oder Aceton) in ein Reagenzglas gegeben und mit einem Wattebausch an der Öffnung versehen, so dass eine mit Lösemittel gesättigte Atmosphäre innerhalb des Reagenzglases entsteht. Die Reagenzgläser werden anschließend mit dem Wattebausch auf die Lackoberfläche gebracht und verbleiben dort für 5 min. Nach Abwischen des Lösemittels wurde der Film auf Zerstörung/Erweichung/Haftverlust geprüft

Gitterschnitt: Der Gitterschnitt auf Glas erfolgt nach DIN ISO 2409 wobei ein Messer mit 1 mm Abstand verwendet wurde.

NaOH-Beständigkeit: Die beschichteten Gläser wurden für 8 Stunden bei 70 °C in einer 5%igen NaOH-Lösung gelagert, anschließend mit destilliertem Wasser abgespült, getrocknet und auf optische Veränderungen (Defekte, Trübungen...) sowie auf eventuelle Haftverluste geprüft (Nagelprobe). Eine erste Zwischenabmusterung erfolgte bereits nach 5 Stunden.

Alkohol-Test: Die beschichteten Gläser wurden für 4h in 40%igem Ethanol gelagert. Der Lackfilm sollte nicht erweichen, sich ablösen oder optische Schädigungen aufweisen. EKW-Test: Auf die beschichteten Gläser wurde ein mit Echt Kölnisch Wasser (EKW) getränkter Wattebausch aufgebracht und mit einem geschlossenen Behältnis abgedeckt, für 24 Stunden. bei Raumtemperatur gelagert. Die Farbe sollte nicht ausbluten (weißes Tuch), der Lackfilm darf keine Erweichung zeigen (Nagelprobe). Der Farbton sollte sich optisch nicht verändern. Die Testflüssigkeit sollte keine Verfärbung zeigen.

Immersionstest: Die beschichteten Gläser wurden bis zu 10 Tage in Leitungswasser bei 40 °C gelagert. Es wurde täglich geprüft, ob es zu einer Veränderung gekommen war. (Erweichung, optische Veränderung, Delamination)

### Herstellung der Dispersionen:

### Beispiel 1 (erfindungsgemäß)

In einem Reaktionsgefäß wurden 141,6 g DMP in 150 g Aceton suspendiert und auf 50 °C aufgeheizt. Zu der entstehenden Lösung wurden 340,5 g Desmodur N 3300 getropft und so lange gerührt, bis der theoretische NCO-Wert (= 1,92%, DIN EN ISO 11909) erreicht war. Anschließend wurde innerhalb von 5 min. 45,1 g KV 1386 in 103 g Wasser zudosiert und 15 min. nachgerührt. Danach wurden 586 g Wasser zugegeben und das Aceton abdestilliert. Man erhielt eine wässrige Dispersion mit einer Viskosität von 230 mPas und einem Feststoffgehalt von 45,3 Gew.-%.

Es wurde eine lagerstabile PU-Dispersion erhalten, deren mittels thermogravimetrischer Analyse bestimmter Temperaturbereich zur Abspaltung von DMP zur Freisetzung der NCO -Gruppen bei ca. 97 °C begann.

### Beispiel 2 (Vergleichsbeispiel)

In einem Reaktionsgefäß wurden 141,6 g DMP in 150 g Aceton suspendiert und auf 50 °C aufgeheizt. Zu der entstehenden Lösung wurden 340,5 g Desmodur N 3300 getropft und so lange gerührt, bis der theoretische NCO-Wert (= 1,92%) erreicht war. Anschließend wurde innerhalb von 5 min. 49,9 g AAS-Salz in 103 g Wasser zudosiert und 15 min. nachgerührt. Danach wurden 586 g Wasser zugegeben und das Aceton abdestilliert. Man erhielt eine hochviskose pastöse Zusammensetzung, die für Beschichtungen nicht geeignet ist.

Es wurde keine Dispersion erhalten (Produkt zu viskos).

### Beispiel 3 (Vergleichsbeispiel)

In einem Reaktionsgefäß wurden 141,6 g DMP in 150 g Aceton suspendiert und auf 50 °C aufgeheizt. Zu der entstehenden Lösung wurden 340,5 g Desmodur N 3300 getropft und so lange gerührt, bis der theoretische NCO-Wert (= 1,92%) erreicht war. Anschließend wurde innerhalb von 5 min. 50,5 g Polyethersulfonat in 105 g Wasser zudosiert und 15 min. nachgerührt. Danach wurden 420 g Wasser zugegeben und das Aceton abdestilliert. Man erhielt eine Dispersion, die in kürzester Zeit zwei Phasen bildet und deswegen zur Herstellung von Beschichtungen nicht geeignet war.

Es wurde keine stabile Dispersion erhalten(zwei Phasen).

### Beispiel 4 (Vergleichsbeispiel)

In einem Reaktionsgefäß wurden 166,7 g Caprolactam in 150 g Aceton suspendiert und auf 50 °C aufgeheizt. Zu der entstehenden Lösung wurden 340,5 g Desmodur N 3300 getropft und so lange gerührt, bis der theoretische NCO-Wert (= 1,85%) erreicht war. Anschließend wurde innerhalb von 5 min. 45,1 g KV 1386 in 103 g Wasser zudosiert und 15 min. nachgerührt. Danach wurden 448 g Wasser zugegeben und das Aceton abdestilliert. Man erhielt eine wässrige Dispersion mit einer Viskosität von 970 mPas und einem Feststoffgehalt von 46,2 Gew.-%.

Es wurde zwar eine lagerstabile PU-Dispersion erhalten, deren mittels thermogravimetrischer Analyse bestimmter Temperaturbereich zur Abspaltung von ε-Caprolactam zur Freisetzung der NCO -Gruppen aber erst bei ca. 145 °C begann..

### Beispiel 5 (erfindungsgemäß)

In einem Reaktionsgefäß wurden 132 g DMP und 100 g DE 3600 in 150 g Aceton suspendiert und auf 50 °C aufgeheizt. Zu der entstehenden Lösung wurden 340,5 g Desmodur N 3300 getropft und so lange gerührt, bis der theoretische NCO-Wert (= 1,68%) erreicht war. Anschließend wurde innerhalb von 5 min. 45,1 g KV 1386 in 103 g Wasser zudosiert und 15 min. nachgerührt. Danach wurden 448 g Wasser zugegeben und das Aceton abdestilliert. Man erhielt eine wässrige Dispersion mit einer Viskosität von 970 mPas und einem Feststoffgehalt von 46,2 Gew.-%.

Es wurde eine lagerstabile PU-Dispersion erhalten, deren mittels thermogravimetrischer Analyse bestimmter Temperaturbereich zur Abspaltung von DMP zur Freisetzung der NCO - Gruppen bei ca. 105 °C begann.

### Beispiel 6 (Gegenbeispiel)

In einem Reaktionsgefäß wurden 122 g DMP und 13,4 g DMPS in 150 g Aceton suspendiert und auf 50 °C aufgeheizt. Zu der entstehenden Lösung wurden 293 g Desmodur N 3300 getropft und so lange gerührt, bis der theoretische NCO-Wert (= 0,35%) erreicht war. Anschließend wurde innerhalb von 5 min. 8 g NaOH in 471 g Wasser zudosiert und 15 min. nachgerührt. Eine vollständige Dispergierung konnte nicht erreicht werden, da sich an der Gefäßwand starke Ausscheidungen bildeten.

Es wurde keine Dispersion erhalten (starke Ausscheidungen).

### Bewertung:

Die Gegenbeispiele zeigen, dass es nach dem Stand der Technik nicht möglich ist ein wässriges, blockiertes Polyisocyanat mit Carboxylatgruppen aminfrei herzustellen. Das Einbringen von Carboxylfunktionen über ein entsprechend substituiertes Diol mit anschließender Neutralisation der Carbonsäuregruppe ist wie Bespiel 6 zeigt nicht möglich. Die Gegenbeispiele 2 und 3, bei denen SO₃Na Gruppen eingebaut sind, belegen, dass auf diesem Weg keine niedrig-viskosen Dispersionen erhältlich sind, die zur Herstellung von qualitativ hochwertigen Beschichtungen erforderlich sind.

### Anwendungsbeispiel aus Glaslackierung:

Die Herstellung der Beschichtungsmittel erfolgt indem die Bindemittel vorgelegt werden und mehrere Minuten bei Raumtemperatur gerührt werden. Zur Viskositätseinstellung kann ggf. Wasser hinzu gegeben werden. Kurz vor der Applikation erfolgt anschließend die Zugabe der Haftvermittlerlösung der Silane in Dipropylenglykol unter Rühren. Nach mind. 5 min. wird die Formulierung auf eine Glasplatte aufgebracht und danach 10 min. bei Raumtemperatur und anschließend für 30 min. bei 180 °C getrocknet.

| **Polyol** | **Bayhydrol A XP 2770** | | |
|---|---|---|---|
| **Vernetzer** | **Bsp**. **1** | **Bayhydur BL 2810 XP** | **Bayhydur BL XP 2706** |
| Vernetzungsverhältnis | NCO=OH=1,0 | | |

| **FORMULIERUNG** | | | |
|---|---|---|---|
| Bayhydrol A XP 2770, Lff. | 55,16 | 44,54 | 42,49 |
| Bsp.1 | 42,24 | | |
| Bayhydur BL 2810 XP, Lff. | | 53,06 | |
| Bayhydur BL XP 2706, Lff. | | | 50,61 |
| Dest. Wasser | | | 4,50 |
| Haftvermittler (1,2% Silan bezogen auf Festharze) | | | |
| Silquest A 189, Lff. | 0,26 | 0,24 | 0,24 |
| Dynasilan AMEO, Lff. | 0,26 | 0,24 | 0,24 |
| Dipropylenglykol | 2,08 | 1,92 | 1,92 |
| | 100.00 | 100.00 | 100.00 |

| **Polyol** | | **Bayhydrol A XP 2770** | | |
|---|---|---|---|---|
| **Vernetzer** | | **Imprafix 2794 XP** | **Bayhydur BL 2810 XP** | **Bayhydur BL XP 2706** |
| Pendelhärte nach König *(DIN EN ISO 1522)* | | 199s | 207s | 206s |
| Vergilbung b *(DIN 6174)* | | **0,3** | 0,5 | 0,6 |
| Lösemittelbeständigkeit 5' | | 0001 | 0012 | 0002 |
| Gitterschnitt | | 0 | 0 | 0 |
| NaOH-Beständigkeit | 5h | **0** | 2 | 5 |
| | 8h | **0** | 4 | --- |
| Alkoholtest 40% / 4h | | **0** | 2 | 2 |
| EKW 24h RT | | 2 | 3 | 3 |
| Immersionstest 40°C | | > 10d | > 10d | >10d |

| | | | | |
|---|---|---|---|---|
| Auswerteschlüssel: 0= keine Veränderung 5= Film zerstört | | | | |

Das vorstehende Anwendungsbeispiel zeigt, dass die erfindungsgemäßen wässrigen blockierten Polyurethanharnstoffdispersionen zur Herstellung von Beschichtungen verwendet werden können, die gegenüber aus dem Stand der Technik bekannten Systemen insbesondere eine höhere Beständigkeit gegenüber Laugen (NaOH) aufweisen.

## Patentansprüche

1. Wässrige blockierte Polyurethanharnstoffdispersion erhältlich durch Umsetzung von wenigstens
a) einem Polyisocyanat,
b) einem Blockierungsmittel für Isocyanatgruppen,
c) einem Polyamin mit wenigstens einer Carboxyl- und/oder Carboxylatgruppe,
d) Wasser,
wobei das Blockierungsmittel b) 3,5-Dimethylpyrazol umfasst oder daraus besteht und in einem Anteil von ≥ 70 mol% bezogen auf die Isocyanatgruppen der Komponente a) eingesetzt wird.

2. Wässrige blockierte Polyurethanharnstoffdispersion nach Anspruch 1, **dadurch gekennzeichnet, dass** das Polyisocyanat a) eine Isocyanatfunktionalität von ≥ 2 und ≤ 6, bevorzugt von ≥ 3 und ≤ 5 und besonders bevorzugt von ≥ 3 und ≤ 4 aufweist.

3. Wässrige blockierte Polyurethanharnstoffdispersion nach einem der Ansprüche 1 oder 2, **dadurch gekennzeichnet, dass** das Polyisocyanat a) aliphatische Polyisocyanate, bevorzugt Hexamethylendiisocyanat und besonders bevorzugt Trimere von Hexamethylendiisocyanat umfasst.

4. Wässrige blockierte Polyurethanharnstoffdispersion nach einem der Ansprüche 1 bis 3, **dadurch gekennzeichnet, dass** das Polyisocyanat a) einen NCO-Gruppen Gehalt von 15 bis 30, bevorzugt von 18 bis 25 und besonders bevorzugt von 20 bis 24 Gew.-%, bezogen auf das zahlenmittlere Molgewicht des Polyisocyanats, aufweist.

5. Wässrige blockierte Polyurethanharnstoffdispersion nach einem der Ansprüche 1 bis 4, **dadurch gekennzeichnet, dass** das Polyamin c) eine Funktionalität an primären und / oder sekundären Amingruppen von ≥ 2 und ≤ 6, bevorzugt von ≥ 2 und ≤ 5 und besonders bevorzugt von ≥ 2 und ≤ 3 aufweist.

6. Wässrige blockierte Polyurethanharnstoffdispersion nach einem der Ansprüche 1 bis 5, **dadurch gekennzeichnet, dass** das Polyamin c) eine Carboxyl- und/oder Carboxylatfunktionalität von ≥ 1 und ≤ 3, bevorzugt von ≥ 1 und ≤ 2 und besonders bevorzugt von 1 aufweist.

7. Wässrige blockierte Polyurethanharnstoffdispersion nach einem der Ansprüche 1 bis 6, **dadurch gekennzeichnet, dass** die Carboxylatgruppe eine Alkalicarboxylatgruppe und bevorzugt eine Natriumcarboxylatgruppe ist.

8. Wässrige blockierte Polyurethanharnstoffdispersion nach einem der Ansprüche 1 bis 7, **dadurch gekennzeichnet, dass** sie ausschließlich anionisch hydrophiliert ist.

9. Beschichtungsmittel umfassend wenigstens eine wässrige blockierte Polyurethanharnstoffdispersion nach einem der Ansprüche 1 bis 8 und eine nicht-reaktive Polyurethandispersion e) und / oder eine Isocyanatreaktive-Verbindung f).

10. Beschichtungsmittel nach Anspruch 9, **dadurch gekennzeichnet, dass** die Isocyanat-reaktive-Verbindung f) eine Funktionalität an Isocyanatreaktiven-Gruppen von ≥ 2 und ≤ 6, bevorzugt von ≥ 3 und ≤ 5 und besonders bevorzugt von ≥ 3 und ≤ 4 aufweist.

11. Beschichtungsmittel nach Anspruch 9 oder 10, **dadurch gekennzeichnet, dass** die Isocyanatreaktiven-Gruppen ausgewählt aus der Gruppe OH, SH, NH, NH₂, H₂N-NH sind.

12. Beschichtungsmittel nach einem der Ansprüche 9 bis 11, **dadurch gekennzeichnet, dass** die Isocyanatreaktive-Verbindung f) ein Polyol und besonders bevorzugt ein Polyacrylat-Polyol umfasst.

13. Verwendung einer wässrigen blockierten Polyurethanharnstoffdispersion nach einem der Ansprüche 1 bis 8 oder eines Beschichtungsmittels nach einem der Ansprüche 9 bis 12 zu Herstellung einer Beschichtung.

14. Beschichtung, erhältlich unter Verwendung einer wässrigen blockierten Polyurethanharnstoffdispersion nach einem der Ansprüche 1 bis 8 oder eines Beschichtungsmittels nach einem der Ansprüche 9 bis 12.

15. Verfahren zur Herstellung einer wässrigen blockierten Polyurethanharnstoffdispersion nach einem der Ansprüche 1 bis 8, bei dem das Polyisocyanat a) mit dem Blockierungsmittel b) zu einem teilweise blockierten Polyisocyanat und das teilweise blockierte Polyisocyanat mit dem Polyamin c) zu einem hydrophilierten Polyurethanharnstoff umgesetzt und in Wasser dispergiert wird.

## Claims

1. Aqueous blocked polyurethaneurea dispersion obtainable by reacting at least
a) one polyisocyanate,
b) one blocking agent for isocyanate groups,
c) one polyamine having at least one carboxyl and/or carboxylate group,
d) water,
the blocking agent b) comprising or consisting of 3,5-dimethylpyrazole and being used in a fraction of > 70 mol% based on the isocyanate groups of component a).

2. Aqueous blocked polyurethaneurea dispersion according to Claim 1, **characterized in that** the polyisocyanate a) has an isocyanate functionality of ≥ 2 and ≤ 6, preferably of ≥ 3 and ≤ 5 and more preferably of ≥ 3 and ≤ 4.

3. Aqueous blocked polyurethaneurea dispersion according to either of Claims 1 and 2, **characterized in that** the polyisocyanate a) comprises aliphatic polyisocyanates, preferably hexamethylene diisocyanate and more preferably trimers of hexamethylene diisocyanate.

4. Aqueous blocked polyurethaneurea dispersion according to any of Claims 1 to 3, **characterized in that** the polyisocyanate a) has an NCO groups content of 15 to 30, preferably of 18 to 25 and more preferably of 20 to 24 wt%, based on the number-average molar weight of the polyisocyanate.

5. Aqueous blocked polyurethaneurea dispersion according to any of Claims 1 to 4, **characterized in that** the polyamine c) has a functionality in terms of primary and/or secondary amine groups of ≥ 2 und ≤ 6, preferably of ≥ 2 and ≤ 5 and more preferably of ≥ 2 and ≤ 3.

6. Aqueous blocked polyurethaneurea dispersion according to any of Claims 1 to 5, **characterized in that** the polyamine c) has a carboxyl and/or carboxylate functionality of ≥ 1 and ≤ 3, preferably of ≥ 1 and ≤ 2 and more preferably of 1.

7. Aqueous blocked polyurethaneurea dispersion according to any of Claims 1 to 6, **characterized in that** the carboxylate group is an alkali metal carboxylate group and preferably a sodium carboxylate group.

8. Aqueous blocked polyurethaneurea dispersion according to any of Claims 1 to 7, **characterized in that** it is exclusively anionically hydrophilized.

9. Coating composition comprising at least one aqueous blocked polyurethaneurea dispersion according to any of Claims 1 to 8 and a non-reactive polyurethane dispersion e) and/or an isocyanate-reactive compound f).

10. Coating composition according to Claim 9, **characterized in that** the isocyanate-reactive compound f) has a functionality in terms of isocyanate-reactive groups of ≥ 2 und ≤ 6, preferably of ≥ 3 und ≤ 5 and more preferably of ≥ 3 und ≤ 4.

11. Coating composition according to Claim 9 or 10, **characterized in that** the isocyanate-reactive groups are selected from the group of OH, SH, NH, NH₂, H₂N-NH.

12. Coating composition according to any of Claims 9 to 11, **characterized in that** the isocyanate-reactive compound f) comprises a polyol and more preferably a polyacrylate polyol.

13. Use of an aqueous blocked polyurethaneurea dispersion according to any of Claims 1 to 8 or of a coating composition according to any of Claims 9 to 12 for producing a coating.

14. Coating obtainable using an aqueous blocked polyurethaneurea dispersion according to any of Claims 1 to 8 or a coating composition according to any of Claims 9 to 12.

15. Method for producing an aqueous blocked polyurethaneurea dispersion according to any of Claims 1 to 8, wherein the polyisocyanate a) is reacted with the blocking agent b) to give a partly blocked polyisocyanate, and the partly blocked polyisocyanate is reacted with the polyamine c) to give a hydrophilized polyurethaneurea, which is dispersed in water.

## Revendications

1. Dispersion aqueuse de polyuréthane-urée bloquée pouvant être obtenue par mise en réaction d'au moins
a) un polyisocyanate,
b) un agent bloquant pour les groupes isocyanate,
c) une polyamine contenant au moins un groupe carboxyle et/ou carboxylate,
d) de l'eau,
l'agent bloquant b) comprenant du 3,5-diméthylpyrazole ou en étant constitué et étant utilisé en une proportion > 70 % en moles par rapport aux groupes isocyanate du composant a).

2. Dispersion aqueuse de polyuréthane-urée bloquée selon la revendication 1, **caractérisée en ce que** le polyisocyanate a) présente une fonctionnalité isocyanate ≥ 2 et ≤ 6, de préférence ≥ 3 et ≤ 5, et de manière particulièrement préférée ≥ 3 et ≤ 4.

3. Dispersion aqueuse de polyuréthane-urée bloquée selon l'une quelconque des revendications 1 ou 2, **caractérisée en ce que** le polyisocyanate a) comprend des polyisocyanates aliphatiques, de préférence du diisocyanate d'hexaméthylène et de manière particulièrement préférée des trimères de diisocyanate d'hexaméthylène.

4. Dispersion aqueuse de polyuréthane-urée bloquée selon l'une quelconque des revendications 1 à 3, **caractérisée en ce que** le polyisocyanate a) présente une teneur en groupes NCO de 15 à 30, de préférence de 18 à 25 et de manière particulièrement préférée de 20 à 24 % en poids, par rapport au poids moléculaire moyen en nombre du polyisocyanate.

5. Dispersion aqueuse de polyuréthane-urée bloquée selon l'une quelconque des revendications 1 à 4, **caractérisée en ce que** la polyamine c) présente une fonctionnalité en groupes amino primaires et/ou secondaires ≥ 2 et ≤ 6, de préférence ≥ 2 et ≤ 5, et de manière particulièrement préférée ≥ 2 et ≤ 3.

6. Dispersion aqueuse de polyuréthane-urée bloquée selon l'une quelconque des revendications 1 à 5, **caractérisée en ce que** la polyamine c) présente une fonctionnalité carboxyle et/ou carboxylate ≥ 1 et ≤ 3, de préférence ≥ 1 et ≤ 2, et de manière particulièrement préférée de 1.

7. Dispersion aqueuse de polyuréthane-urée bloquée selon l'une quelconque des revendications 1 à 6, **caractérisée en ce que** le groupe carboxylate est un groupe carboxylate alcalin et de préférence un groupe carboxylate de sodium.

8. Dispersion aqueuse de polyuréthane-urée bloquée selon l'une quelconque des revendications 1 à 7, **caractérisée en ce qu'**elle est exclusivement hydrophilisée anioniquement.

9. Agent de revêtement comprenant au moins une dispersion aqueuse de polyuréthane-urée bloquée selon l'une quelconque des revendications 1 à 8 et une dispersion de polyuréthane non réactive e) et/ou un composé réactif avec les isocyanates f).

10. Agent de revêtement selon la revendication 9, **caractérisé en ce que** le composé réactif avec les isocyanates f) présente une fonctionnalité en groupes réactifs avec les isocyanates ≥ 2 et ≤ 6, de préférence ≥ 3 et ≤ 5, et de manière particulièrement préférée ≥ 3 et ≤ 4.

11. Agent de revêtement selon la revendication 9 ou 10, **caractérisé en ce que** les groupes réactifs avec les isocyanates sont choisis dans le groupe constitué par OH, SH, NH, NH₂, H₂N-NH.

12. Agent de revêtement selon l'une quelconque des revendications 9 à 11, **caractérisé en ce que** le composé réactif avec les isocyanates f) comprend un polyol et de manière particulièrement préférée un polyacrylate-polyol.

13. Utilisation d'une dispersion aqueuse de polyuréthane-urée bloquée selon l'une quelconque des revendications 1 à 8 ou d'un agent de revêtement selon l'une quelconque des revendications 9 à 12 pour la fabrication d'un revêtement.

14. Revêtement, pouvant être obtenu en utilisant une dispersion aqueuse de polyuréthane-urée bloquée selon l'une quelconque des revendications 1 à 8 ou un agent de revêtement selon l'une quelconque des revendications 9 à 12.

15. Procédé de fabrication d'une dispersion aqueuse de polyuréthane-urée bloquée selon l'une quelconque des revendications 1 à 8, selon lequel le polyisocyanate a) est mis en réaction avec l'agent bloquant b) pour former un polyisocyanate partiellement bloqué et le polyisocyanate partiellement bloqué est mis en réaction avec la polyamine c) pour former une polyuréthane-urée hydrophilisée et celle-ci est dispersée dans de l'eau.
